# EUROPEAN PATENT APPLICATION

(11) **EP 4 654 310 A1**
(43) Date of publication of application: **26.11.2025**
(21) Application number: 25178666.1
(22) Date of filing: 23.05.2025
(51) Int. Cl.: H01M 10/04, H01M 50/107, H01M 50/152, H01M 50/169, H01M 50/536, H01M 50/548, H01M 50/559, H01M 50/566, H01M 50/609, H01M 50/627, H01M 50/136

(54) **CYLINDRICAL SECONDARY BATTERY AND METHOD FOR MANUFACTURING CYLINDRICAL SECONDARY BATTERY**

(30) Priority: 24.05.2024 KR 20240067977
(71) Applicant: SK On Co., Ltd., Seoul 03161 (KR)
(72) Inventor: LEE, Jae Myoung, Daejeon 34124 (KR); KIM, Min Seong, Daejeon 34124 (KR)
(74) Representative: Stolmár & Partner Patentanwälte PartG mbB

(57) **Abstract**

A cylindrical secondary battery includes a cylindrical case with open upper and lower portions, an electrode assembly including a negative electrode plate, a positive electrode plate, and a separator and accommodated in the case, a positive electrode cap sealing the open upper portion of the case, and a negative electrode cap sealing the open lower portion of the case, wherein the case includes a step portion formed along the perimeter of the open lower portion, the negative electrode cap is mounted on the step portion, and the step portion is configured such that at least a portion thereof protrudes in an inward direction to support a lower portion of the electrode assembly, the inward direction being toward a central axis of a circular cross-section of the case.

## Description

### TECHNICAL FIELD

The present disclosure relates to a cylindrical secondary battery and a method for manufacturing a cylindrical secondary battery.

### BACKGROUND

Secondary batteries are an energy storage means which are chargeable and dischargeable. Secondary batteries have been widely used in various means using electricity as a power source. For example, secondary batteries have been used as energy storage means in various means ranging from small devices, such as mobile phones, laptops, and tablets, to large devices, such as vehicles and aircraft. In particular, secondary batteries have been actively sought for use as a vehicle power source recently.

Secondary batteries may be classified as lead-acid batteries, nickel-cadmium batteries, nickel-hydrogen batteries, and lithium-ion batteries depending on the materials of electrodes, etc. Secondary batteries of each type may be appropriately selected depending on the design capacity, usage environment, or the like, thereof. Alternatively, secondary batteries may be all-solid-state batteries using a solid electrolyte instead of a liquid electrolyte. Lithium-ion batteries may implement relatively high voltage and capacity compared to other types of secondary batteries. Accordingly, lithium-ion batteries have been widely used in fields requiring high-density energy storage means, such as vehicle battery packs.

Secondary batteries, such as lithium-ion batteries, may include a positive electrode plate, a negative electrode plate, a separator, an electrolyte, etc. The positive electrode plate and the negative electrode plate are arranged with a separator formed of insulating material therebetween, and charging or discharging may be performed by the migration of ions through the electrolyte.

Secondary batteries have been manufactured as flexible pouch-type battery cells or rigid prismatic or cylindrical can-type battery cells.

### SUMMARY

In manufacturing cylindrical secondary batteries, there may be provided a method of directly welding a negative electrode uncoated portion of an electrode assembly and a bottom portion of a case. However, in this method, the welding quality may be uneven when the case is thick and it may be difficult to inspect the welding quality. In addition, the above problem may occur during a welding process of forming an electrolyte injection port in a bottom surface of the case to block the electrolyte injection port in order to precede an electrolyte injection process before the welding process.

The present disclosure may be implemented in some embodiments to improve a manufacturing process of a cylindrical secondary battery

The present disclosure may also be implemented in some embodiments to reduce the components of a cylindrical secondary battery.

The secondary battery and the method for manufacturing a secondary battery of the present disclosure may be widely applied in green technology fields, such as electric vehicles, battery charging stations, or the like. In addition, the secondary battery and the method for manufacturing a secondary battery of the present disclosure may be used in eco-friendly electric vehicles, hybrid vehicles, etc. to ameliorate the effects of climate change by suppressing air pollution and greenhouse gas emissions.

In some embodiments of the present disclosure, a cylindrical secondary battery includes: a cylindrical case with open upper and lower portions; an electrode assembly including a negative electrode plate, a positive electrode plate, and a separator and accommodated in the case; a positive electrode cap sealing the open upper portion of the case; and a negative electrode cap sealing the open lower portion of the case, wherein the case includes a step portion formed along the perimeter of the open lower portion, the negative electrode cap is mounted on the step portion, and the step portion is configured such that at least a portion thereof protrudes in an inward direction to support a lower portion of the electrode assembly, the inward direction being toward a central axis of a circular cross-section of the case.

The electrode assembly may include a positive electrode uncoated portion formed as at least a portion of the positive electrode plate protrudes and a negative electrode uncoated portion formed as at least a portion of the negative electrode plate protrudes.

The negative electrode uncoated portion may protrude downward from a lower portion of the electrode assembly and may be located in the inward direction relative to the step portion, the inward direction being toward a central axis of a circular cross-section of the case.

The cylindrical secondary battery may further include: a negative electrode current collector electrically connected to the negative electrode uncoated portion.

The negative electrode current collector may have a shape corresponding to at least a portion of the step portion to be mounted on the step portion.

The negative electrode current collector may include a negative electrode plate contacting the negative electrode uncoated portion and a negative electrode flange contacting a lower portion of the step portion.

The negative electrode current collector may include an electrolyte injection port formed to inject an electrolyte.

The electrolyte injection port may be formed on the negative electrode plate.

The negative electrode cap may be located below the negative electrode current collector.

The step portion may be located above a lower end of the case.

The cylindrical secondary battery may further include: a positive electrode current collector electrically connected to the positive electrode uncoated portion.

The positive electrode cap may include a positive electrode plate covering the open upper portion of the case and a positive electrode terminal electrically connected to the positive electrode current collector.

The positive electrode cap may include a gasket electrically insulating the positive electrode terminal and the positive electrode plate.

The step portion may include an elastic member pushing the electrode assembly upward.

In some embodiments of the present disclosure, a method of manufacturing a cylindrical secondary battery includes: a preparatory operation of preparing a cylindrical case having open upper and lower portions and including a step portion in the open lower portion; an insertion operation of inserting an electrode assembly to which a positive electrode current collector is electrically connected to the open upper portion of the case; a negative electrode connection operation of mounting the negative electrode current collector on the step portion and then electrically connecting the negative electrode current collector to the electrode assembly; and a lower portion sealing operation of mounting the negative electrode cap on the step portion and then sealing the open lower portion of the case.

The method may further include: an injection operation of injecting an electrolyte into an electrolyte injection port formed on the negative electrode current collector.

The method may further include: a positive electrode connection operation of electrically connecting the positive electrode current collector to the electrode assembly

The method may further include: an upper portion sealing operation of sealing the open upper portion of the case with a positive electrode cap.

The method may further include: a terminal connection operation of electrically connecting the positive electrode terminal of the positive electrode cap to the electrode assembly.

### BRIEF DESCRIPTION OF DRAWINGS

Certain aspects, features, and advantages of the present disclosure are illustrated by the following detailed description with reference to the accompanying drawings.
FIG. 1 is an exploded perspective view illustrating a cylindrical secondary battery according to the present disclosure.
FIG. 2 is a cross-sectional view illustrating a cylindrical secondary battery according to the present disclosure.
FIG. 3 is a cross-sectional view illustrating a positive electrode connection operation.
FIG. 4 is a cross-sectional view illustrating an insertion operation.
FIG. 5 is a cross-sectional view illustrating an upper portion sealing operation.
FIG. 6 is a cross-sectional view illustrating a terminal connection operation.
FIG. 7 is a cross-sectional view illustrating a negative electrode connection operation.
FIG. 8 is a cross-sectional view illustrating an injection operation.
FIG. 9 is a cross-sectional view illustrating a lower portion sealing operation.
FIG. 10 is a flowchart illustrating a method for manufacturing a cylindrical secondary battery according to the present disclosure.
FIG. 11 is a cross-sectional view illustrating an operation of inserting a cylindrical secondary battery of another embodiment.
FIG. 12 is a cross-sectional view illustrating a cylindrical secondary battery of another embodiment.

### DETAILED DESCRIPTION

Hereinafter, embodiments of the present disclosure will be described with reference to the accompanying drawings. For convenience, in the following description, a detailed description that obscures the technical gist of the present disclosure or for a known component will be omitted.

The following embodiments are provided to more completely describe the present disclosure to those skilled in the art to which the present disclosure pertains. The following embodiments are provided to aid understanding of the present disclosure, and the technical idea of the present disclosure is not necessarily limited to the specific embodiments described below.

Terms used in the following embodiments are provided to more completely describe specific embodiments from the above viewpoint. Accordingly, the terms used in the following embodiments should not be construed to reduce, limit, or restrict the technical idea of the present disclosure.

In the following description, singular expressions may be interpreted to include plurality unless clearly excluded in the context. In addition, the expression "including" in the following description means that a component, a part, an operation, a feature, an operation, a number, etc. described in the description exist, and does not mean that addition of and one or more other components, parts, operations, features, operations, numbers, etc. are excluded.

The secondary battery or battery cell described in this specification may encompass a rechargeable battery. For example, the secondary battery may include a lead-acid battery, a nickel-cadmium battery, a nickel-hydrogen battery, a lithium-ion battery, etc. In this description, it is mainly assumed that the secondary battery is a lithium-ion battery. However, it should be understood that the technical concepts described in this specification may be applied to other suitable types of batteries in addition to lithium-ion batteries.

Prior to the description of the present disclosure, terms and words used in the present specification and claims to be described below should not be construed as limited to ordinary or dictionary terms, and should be construed in accordance with the technical idea of the present disclosure based on the principle that the inventors may properly define their own inventions in terms of terms in order to best explain the invention.

Hereinafter, embodiments of the present disclosure will be described in detail with reference to the accompanying drawings. In this case, in the drawings, the same components are denoted by the same reference symbols as possible. Further, the detailed description of well-known functions and constructions which may obscure the gist of the present disclosure will be omitted. For the same reason, some of the elements in the accompanying drawings are exaggerated, omitted, or schematically illustrated, and the size of each element does not entirely reflect the actual size. In addition, in the present specification, the expressions, such as an upper side, a lower side, a side face, and the like, are described based on the drawings and may be expressed differently when the direction of the corresponding object is changed.

Hereinafter, a cylindrical secondary battery and a method for manufacturing a cylindrical secondary battery according to the present disclosure will be specifically described with reference to the drawings.

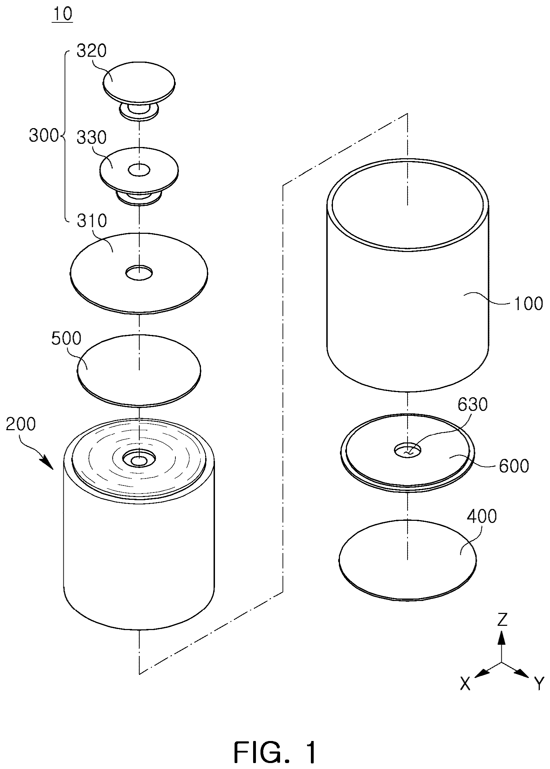

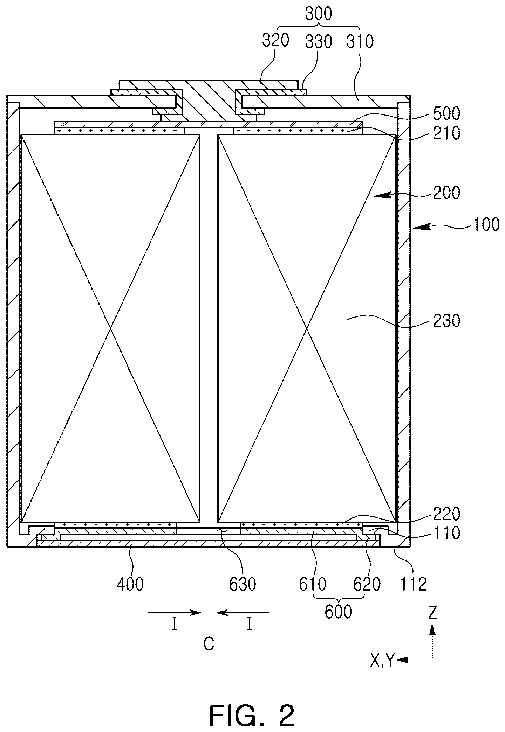

FIG. 1 is an exploded perspective view illustrating a cylindrical secondary battery 10 according to the present disclosure, and FIG. 2 is a cross-sectional view illustrating a cylindrical secondary battery 10 according to the present disclosure.

Referring to FIGS. 1 and 2, the cylindrical secondary battery 10 may include an electrode assembly 200, a case 100, a positive electrode cap 300, and a negative electrode cap 400.

The electrode assembly 200 may include a positive electrode plate, a negative electrode plate, and a separator 230. The separator may include an insulator interposed between a negative electrode plate and a positive electrode plate. The electrode assembly 200 may be configured as a stack type in which a positive electrode plate, a negative electrode plate, and a separator are alternately stacked. Alternatively, the electrode assembly 200 may be configured as a jelly roll type in which a positive electrode plate, a negative electrode plate, and a separator interposed between the positive electrode plate and the negative electrode plate are alternately stacked and wound in a roll shape. In the present disclosure, the electrode assembly 200 is illustrated as being a jelly roll type, but is not limited thereto.

The positive electrode plate and the negative electrode plate may each have a structure in which a positive electrode active material or a negative electrode active material is coated on a foil. For example, the negative electrode plate may be formed by coating graphite or the like on a copper or nickel material foil, and the positive electrode plate may be formed by coating a transition metal oxide active material on an aluminum material foil.

The electrode assembly 200 may include a negative electrode uncoated portion 220 and a positive electrode uncoated portion 210. At least a portion of the positive electrode plate and the negative electrode plate may not be coated with the active material. Regions of the positive and negative electrode plates in which the active material is not coated may be referred to as uncoated portions. At least some of the uncoated portions may be referred to as a positive uncoated portion 210 and a negative uncoated portion 220. Here, the positive uncoated portion 210 and negative uncoated portion 220 may each protrude upward and downward. That is, at least a portion protruding from the positive electrode plate may be the positive uncoated portion 210, and at least a portion protruding the negative electrode plate may be the negative uncoated portion 220. Referring to FIG. 2, the positive uncoated portion 210 may protrude upward from the electrode assembly 200, and the negative uncoated portion 220 may protrude downward from the electrode assembly 200.

The case 100 may accommodate the electrode assembly 200. In other words, the electrode assembly 200 may be accommodated in the case 100. The case 100 may be formed to include an empty space therein to accommodate the electrode assembly 200. The case 100 may include a cylindrical shape. Accordingly, the cylindrical case 100 may include an empty space in the cylindrical shape, and the electrode assembly 200 may be accommodated in the corresponding empty space. The case 100 may include a material having electrical conductivity. For example, the case 100 may be nickel-plated steel, stainless steel, aluminum, etc.

The case 100 may be cylindrical with upper and lower portions open. The electrode assembly 200 may be inserted into the interior of the case 100 through the open upper portion. The upper portion of the case 100 may be sealed with the positive electrode cap 300, and the lower portion may be sealed with the negative electrode cap 400.

The case 100 may include a step portion 110. The step portion 110 may be formed along the periphery of the open lower portion of the case 100. For example, at least a portion of the step portion 110 may protrude in an inward direction I. The inward direction I as referred to herein may be a direction toward a central axis C of the circular cross-section of the case 100. The step portion 110 may be a portion formed to protrude inwardly by bending a portion of the case 100 or by using a mold or the like. Accordingly, when the electrode assembly 200 is inserted into the case 100, the step portion 110 may be configured to support the lower portion of the electrode assembly 200. Here, the negative electrode uncoated portion 220 of the electrode assembly 200 may be positioned in the inward direction I, relative to the step portion 110. The negative electrode uncoated portion 220 may protrude downward from the electrode assembly 200 and be positioned closer to a central axis of the circular cross-section of the case 100 than the step portion 110. In other words, the negative electrode uncoated portion 220 may not be supported by the step portion 110.

The step portion 110 may be located above a lower end 112 of the case. In other words, the step portion 110 may be a portion recessed upward from the lower end 112 of the case. The step portion 110 and the lower end 112 of the case may form a step-like structure. Accordingly, a space in which a negative electrode current collector 600 and the negative electrode cap 400, to be described below, are to be mounted on the step portion 110 may be formed.

The cylindrical secondary battery 10 may further include a positive electrode current collector 500 electrically connected to the positive electrode uncoated portion 210. The positive electrode current collector 500 may include a circular plate shape and may cover an upper portion of the positive electrode uncoated portion 210. The positive electrode current collector 500 may contact and electrically connected to at least a portion of the positive electrode uncoated portion 210. Here, the positive electrode current collector 500 and the positive electrode uncoated portion 210 may be welded.

The positive electrode cap 300 may seal the open upper portion of the case 100. For example, the positive electrode cap 300 may be coupled to the upper portion of the case 100 to seal the open upper portion of the case 100. Various methods may be applied to seal the upper portion of the case 100, but welding is used as an example in this disclosure. Various welding methods using various welding units W may be applied for welding. For example, a laser welding method may be applied.

The positive electrode cap 300 may include a positive electrode plate 310 and a positive electrode terminal 320.

The positive electrode plate 310 may cover the open upper portion of the case 100. For example, the positive electrode plate 310 may include a circular disk shape. The perimeter of the positive electrode plate 310 and an upper end of the case 100 may include shapes corresponding to each other on facing surfaces so as to be joined to each other. The positive electrode plate 310 may be welded at the edge while being joined to the open upper portion of the case 100.

The positive electrode plate 310 may have a hole formed in the center. The positive electrode terminal 320 and a gasket 330 may be inserted into the hole.

The positive electrode terminal 320 may be electrically connected to the positive electrode current collector 500. For example, a lower portion of the positive electrode terminal 320 may be in contact with the positive electrode current collector 500. Here, a method of electrical connection may be welding. An upper portion of the positive electrode terminal 320 may be exposed externally through the hole of the positive electrode plate 310. Therefore, the electrode assembly 200 and the positive electrode terminal 320 may be electrically connected, and the positive electrode terminal 320 may provide a role of transmitting electrical energy externally.

The gasket 330 may be a component electrically insulating the positive electrode terminal 320 and the positive electrode plate 310. The gasket 330 may include an insulator and is positioned between the positive electrode terminal 320 and the positive electrode plate 310 to seal a space between the two components. However, the positive electrode terminal 320 and the positive electrode plate 310 may secure insulation between the two components through an insulating coating, etc. Therefore, the gasket 330 may be an optional component.

The cylindrical secondary battery 10 may further include the negative electrode current collector 600. The negative electrode current collector 600 may be electrically connected to the negative electrode uncoated portion 220. As an electrical connection method, welding or the like may be applied. The negative electrode current collector 600 may include a metallic material and may be electrically connected to the electrode assembly 200.

The negative electrode current collector 600 may be mounted on the step portion 110. The negative electrode current collector 600 may have a shape corresponding to at least a portion of the step portion 110 to be mounted on the step portion 110. For example, the negative electrode current collector 600 may include a negative electrode plate 610 and a negative electrode flange 620. The negative electrode plate 610 may be a portion contacting the negative electrode uncoated portion 220. An upper portion of the negative electrode plate 610 may contact and be electrically connected to the lower portion of the negative electrode uncoated portion 220. The negative electrode flange 620 may be a portion contacting the lower portion of the step portion 110. The negative electrode plate 610 and the negative electrode flange 620 may form a step. That is, the negative electrode flange 620 may be positioned lower than the negative electrode plate 610 and protrude laterally. The upper surface of the negative electrode flange 620 may contact a lower surface of the step portion 110.

Here, the negative electrode plate 610 and the negative electrode uncoated portion 220 may be electrically connected by welding, and the negative electrode flange 620 and the step portion 110 may also be welded for airtightness.

The negative electrode current collector 600 may include an electrolyte injection port 630. The electrolyte injection port 630 may be a hole formed to inject an electrolyte. The electrolyte injection port 630 may be formed in the negative electrode plate 610. When the negative electrode current collector 600 is coupled to the negative electrode uncoated portion 220, the electrolyte may be injected into the case 100 through the electrolyte injection port 630.

The negative electrode cap 400 may seal the open lower portion of the case 100. The negative electrode cap 400 may have a circular plate shape. The negative electrode cap 400 may be welded to the open lower portion of the case 100. The portion in which the perimeter of the negative electrode cap 400 and the case 100 meet may be welded.

The negative electrode cap 400 may be mounted on the step portion 110. For example, after the negative electrode current collector 600 is mounted on the step portion 110, the negative electrode cap 400 may be positioned below the negative electrode current collector 600 to be mounted on the step portion 110. Accordingly, the step portion 110, the negative electrode current collector 600, and the negative electrode cap 400 may be arranged in order from the top to the bottom. The negative electrode cap 400 may be mounted on the step portion 110 and then welded to the case 100 along the perimeter thereof, and the open lower portion of the case 100 may be sealed.

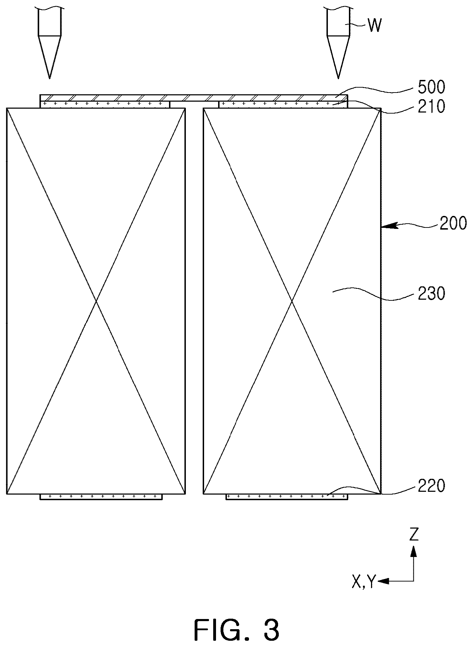

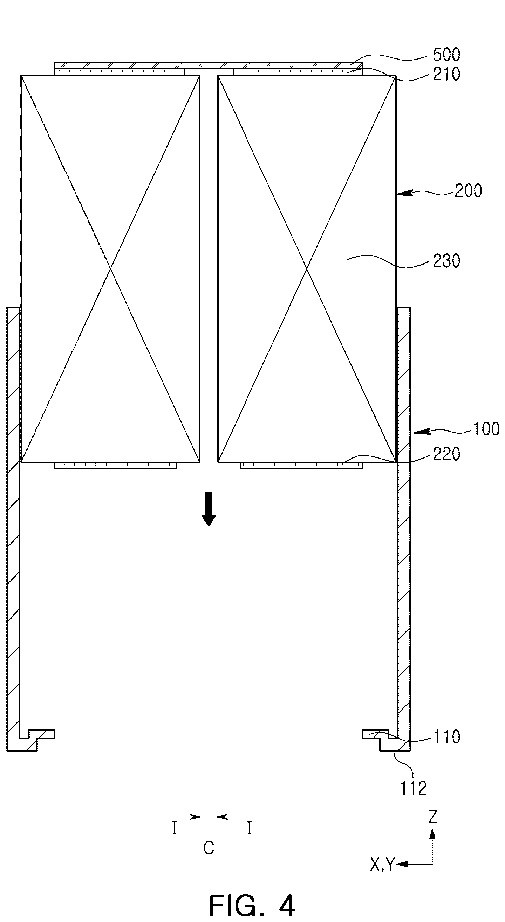

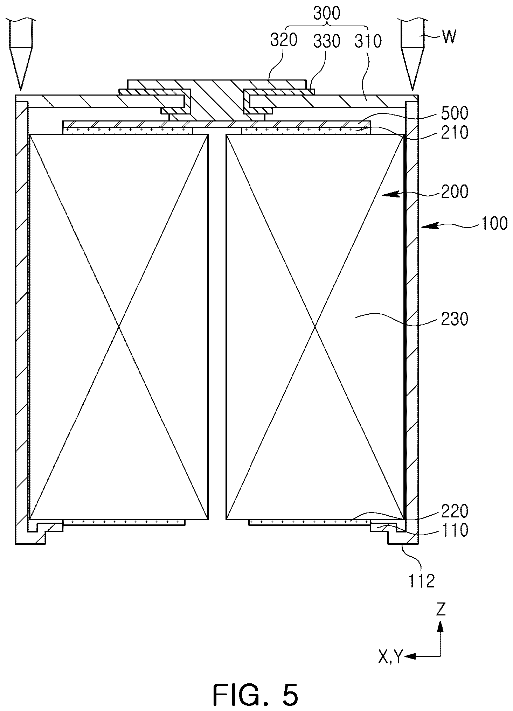

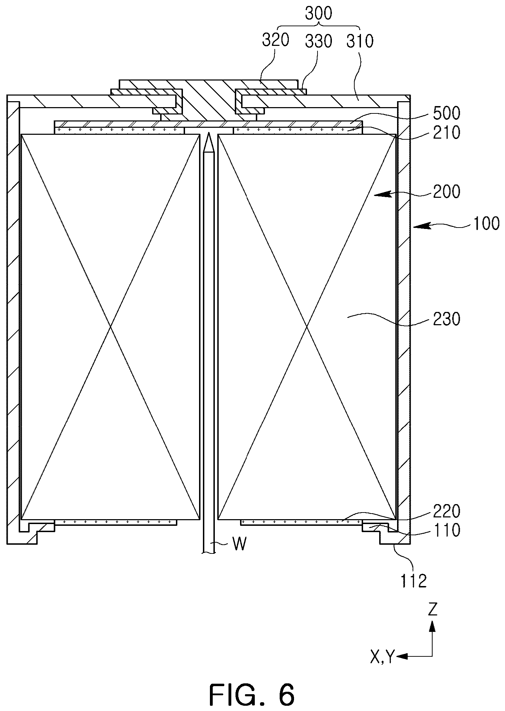

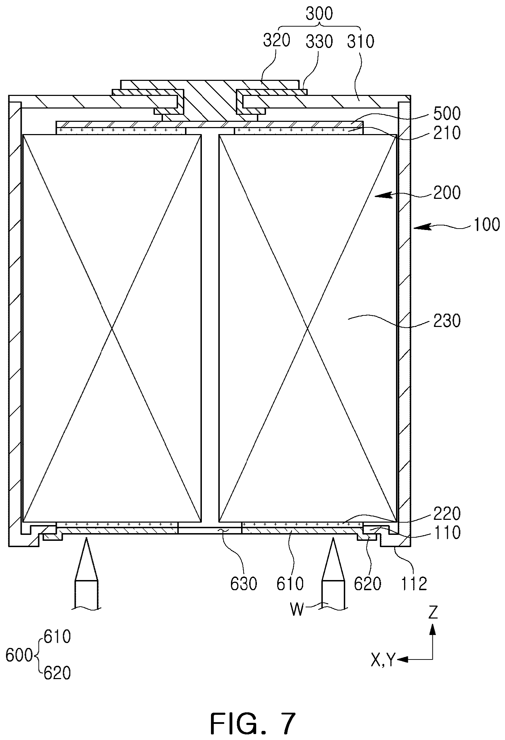

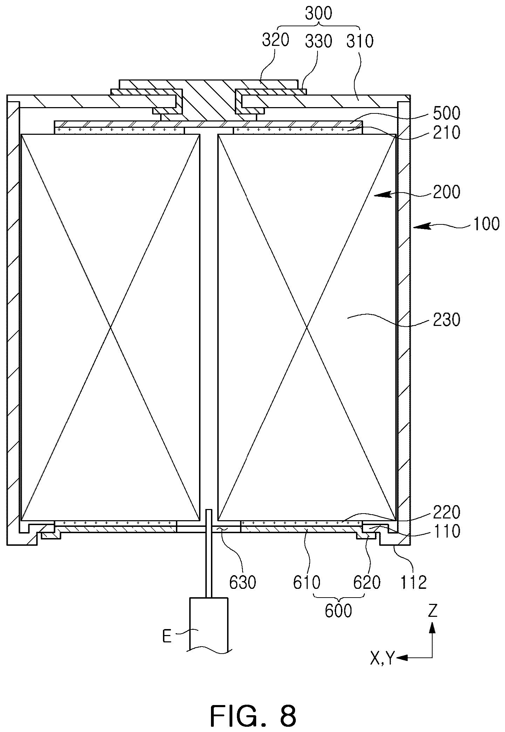

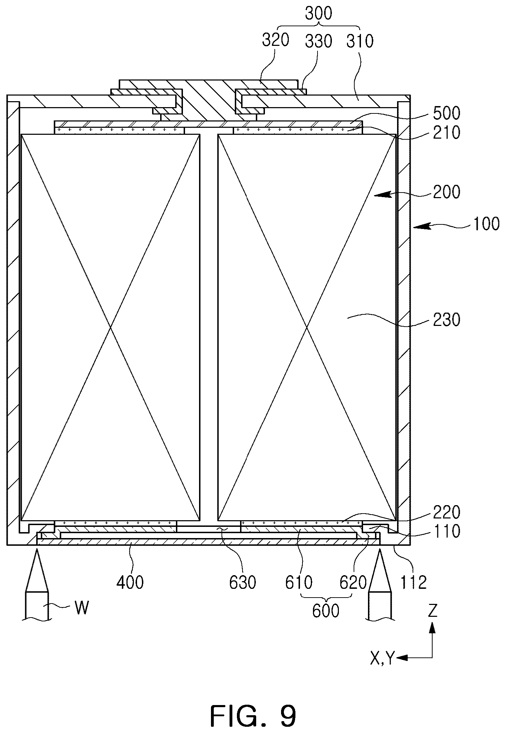

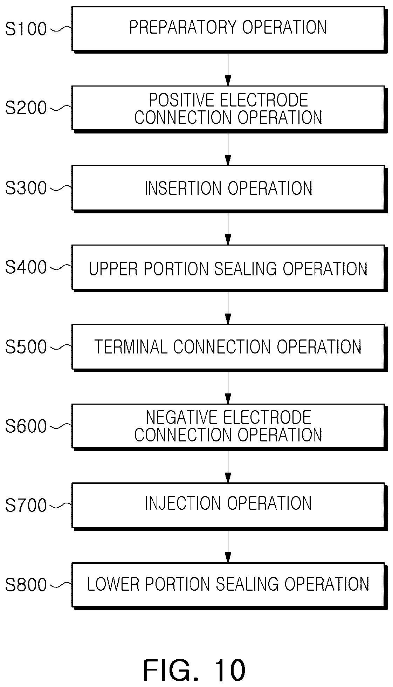

FIG. 3 is a cross-sectional view illustrating a positive electrode connection operation (S200), FIG. 4 is a cross-sectional view illustrating an insertion operation (S300), FIG. 5 is a cross-sectional view illustrating an upper portion sealing operation (S400), FIG. 6 is a cross-sectional view illustrating a terminal connection operation (S500), FIG. 7 is a cross-sectional view illustrating a negative electrode connection operation (S600), FIG. 8 is a cross-sectional view illustrating an injection operation (S700), FIG. 9 is a cross-sectional view illustrating a lower portion sealing operation (S800), and FIG. 10 is a flowchart illustrating a method for manufacturing a cylindrical secondary battery 10 according to the present disclosure.

Referring to FIGS. 3 to 10 together with FIGS. 1 and 2, the method for manufacturing a cylindrical secondary battery 10 may include a preparatory operation (S100), an insertion operation (S300), a negative electrode connection operation (S600), and a lower portion sealing operation (S800). The method for manufacturing a cylindrical secondary battery 10 may further include an upper portion sealing operation (S400), a terminal connection operation (S500), and an injection operation (S700).

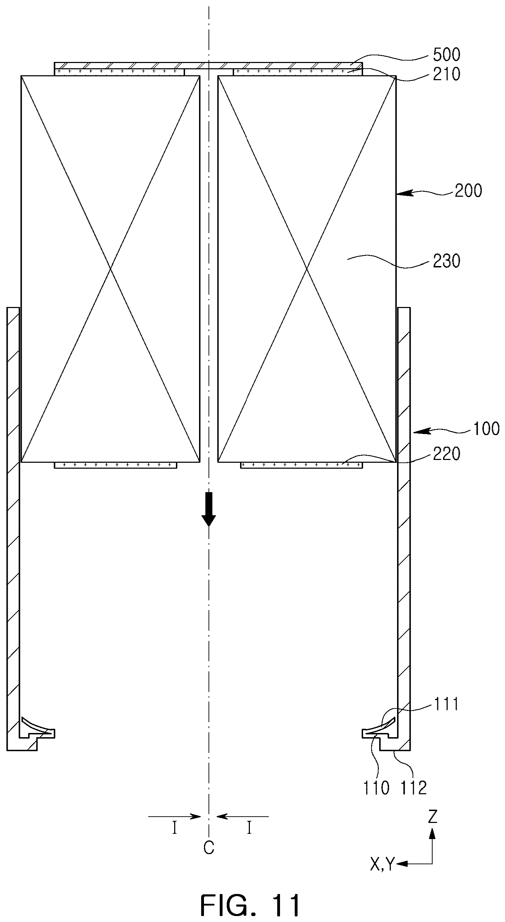

The preparatory operation (S100) may be an operation of preparing the cylindrical case 100. Here, the cylindrical case 100 may be open in the upper and lower portions thereof and may include the step portion 110 in the open lower portion. The cylindrical case 100 may be the case 100 of the form described above with reference to FIGS. 1 to 2 and may also include a case 100 of another embodiment of FIGS. 11 to 12 to be described below.

The insertion operation (S300) may be an operation of inserting the electrode assembly 200 into the case 100. Here, the electrode assembly 200 may be in a state in which the positive electrode current collector 500 is electrically connected. For example, the positive electrode current collector 500 may be welded to the positive electrode uncoated portion 210 of the electrode assembly 200.

Therefore, a positive electrode connection operation (S200) of electrically connecting the positive electrode current collector 500 and the electrode assembly 200 may be further included. The positive electrode connection operation (S200) may be performed before the insertion operation (S300). After the positive electrode current collector 500 is mounted on the positive electrode uncoated portion 210 of the electrode assembly 200, the positive electrode uncoated portion 210 and the positive electrode current collector 500 may be welded. The electrode assembly 200 may be inserted through the open upper portion of the case 100.

The upper portion sealing operation (S400) may be an operation of sealing the open upper portion of the case 100. The open upper portion of the case 100 may be coupled to the positive electrode cap 300 to be sealed. Here, the positive electrode cap 300 may be in a state in which the positive electrode terminal 320 and the gasket 330 are coupled to the positive electrode plate 310. After the positive electrode cap 300 is coupled to the upper portion of the case 100, the perimeter of the positive electrode plate 310 may be welded to the case 100.

The terminal connection operation (S500) may be an operation of electrically connecting the positive electrode terminal 320 of the positive electrode cap 300 and the electrode assembly 200. For example, after the positive electrode cap 300 is connected to the case 100, the positive electrode terminal 320 and the positive electrode current collector 500 may be welded by inserting a welding unit W through the open lower portion of the case 100. Here, the center of the electrode assembly 200 may form an empty space through which the welding unit W may pass.

The negative electrode connection operation (S600) may be an operation of electrically connecting the negative electrode current collector 600 to the electrode assembly 200. Here, the negative electrode current collector 600 may be mounted on the step portion 110 and then electrically connected to the electrode assembly 200. For example, when the negative electrode current collector 600 is mounted on the step portion 110, the negative electrode plate 610 may contact the negative electrode uncoated portion 220 of the electrode assembly 200, and the negative electrode plate 610 and the negative electrode uncoated portion 220 may be welded. Additional welding may be performed along the perimeter of the negative electrode plate 610 to secure the airtightness of the case 100. For example, the negative electrode flange 620 and the step portion 110 may be welded.

The injection operation (S700) may be an operation of injecting an electrolyte. For example, while the negative electrode current collector 600 is electrically connected, the electrolyte may be injected by inserting an electrolyte injector (E) into the electrolyte injection port 630 formed on the negative electrode current collector 600. Here, the case 100 may be turned over so that the bottom faces upward so that the injected electrolyte does not leak out.

The lower portion sealing operation (S800) may be an operation of sealing the open lower portion of the case 100. For example, the negative electrode cap 400 may be mounted on the step portion 110 and then welded to the lower portion of the case 100. Here, the negative electrode current collector 600 may be positioned above the negative electrode cap 400. That is, after the negative electrode current collector 600 is mounted on the step portion 110 and welded, the negative electrode cap 400 may be mounted on the step portion 110 and welded.

The order of each of the operations is an example and may be changed as needed.

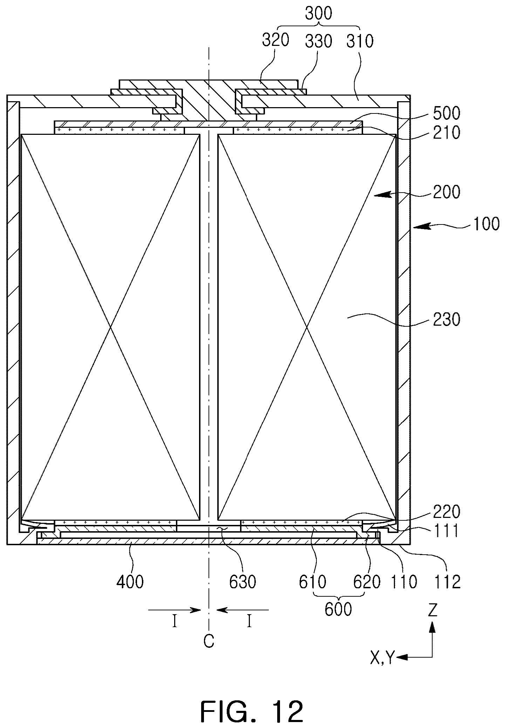

FIG. 11 is a cross-sectional view illustrating an operation of inserting the cylindrical secondary battery 10 of another embodiment, and FIG. 12 is a cross-sectional view illustrating the cylindrical secondary battery 10 of another embodiment.

Referring to FIGS. 11 and 12, the step portion 110 may include an elastic member 111.

The elastic member 111 may push the electrode assembly 200 located there above upward. For example, the elastic member 111 may include a spring. Specifically, the elastic member 111 may include a shape of a plate spring.

When the electrode assembly 200 is inserted into the case 100, the lower portion of the electrode assembly 200 may press the elastic member 111. Here, the elastic member 111 may push the electrode assembly 200 upward by restoring force of the elastic member 111. The electrode assembly 200 may be stably fixed inside the case 100 by the restoring force of the elastic member 111.

According to an embodiment of the present disclosure, the manufacturing process of a cylindrical secondary battery may be improved.

According to an embodiment of the present disclosure, the components of a cylindrical secondary battery may be reduced.

Only specific examples of implementations of certain embodiments are described. Variations, improvements and enhancements of the disclosed embodiments and other embodiments may be made based on the disclosure of this patent document.

The present disclosure also relates to the following aspects.

Aspect 1) cylindrical secondary battery comprising: a cylindrical case with open upper and lower portions; an electrode assembly including a negative electrode plate, a positive electrode plate, and a separator and accommodated in the case; a positive electrode cap sealing the open upper portion of the case; and a negative electrode cap sealing the open lower portion of the case, wherein the case includes a step portion formed along the perimeter of the open lower portion, the negative electrode cap is mounted on the step portion, and the step portion is configured such that at least a portion thereof protrudes in an inward direction to support a lower portion of the electrode assembly, the inward direction being toward a central axis of a circular cross-section of the case.

Aspect 2) In aspect 1, wherein the electrode assembly includes a positive electrode uncoated portion formed as at least a portion of the positive electrode plate protrudes and a negative electrode uncoated portion formed as at least a portion of the negative electrode plate protrudes.

Aspect 3) In aspect 2, wherein the negative electrode uncoated portion protrudes downward from a lower portion of the electrode assembly and is located in the inward direction relative to the step portion, the inward direction being toward a central axis of a circular cross-section of the case.

Aspect 4) In aspect 2 or 3, further comprising a negative electrode current collector electrically connected to the negative electrode uncoated portion.

Aspect 5) In aspect 4, wherein the negative electrode current collector has a shape corresponding to at least a portion of the step portion to be mounted on the step portion.

Aspect 6) In aspect 4 or 5, wherein the negative electrode current collector includes a negative electrode plate contacting the negative electrode uncoated portion and a negative electrode flange contacting a lower portion of the step portion.

Aspect 7) In aspect 6, wherein the negative electrode current collector includes an electrolyte injection port formed to inject an electrolyte.

Aspect 8) In any one of aspects 4 to 7, wherein the negative electrode cap is located below the negative electrode current collector.

Aspect 9) In any one of aspects 1 to 8, wherein the step portion is located above a lower end of the case.

Aspect 10) In any one of aspects 2 to 8, further comprising a positive electrode current collector electrically connected to the positive electrode uncoated portion, wherein the positive electrode cap includes a positive electrode plate covering the open upper portion of the case and a positive electrode terminal electrically connected to the positive electrode current collector.

Aspect 11) In any one of aspects 1 to 10, wherein the step portion includes an elastic member pushing the electrode assembly upward.

Aspect 12) A method of manufacturing a cylindrical secondary battery, the method comprising: a preparatory operation of preparing a cylindrical case having open upper and lower portions and including a step portion in the open lower portion; an insertion operation of inserting an electrode assembly to which a positive electrode current collector is electrically connected to the open upper portion of the case; a negative electrode connection operation of mounting the negative electrode current collector on the step portion and then electrically connecting the negative electrode current collector to the electrode assembly; and a lower portion sealing operation of mounting the negative electrode cap on the step portion and then sealing the open lower portion of the case.

Aspect 13) In aspect 12, further comprising at least one of: an injection operation of injecting an electrolyte into an electrolyte injection port formed on the negative electrode current collector; and a positive electrode connection operation of electrically connecting the positive electrode current collector to the electrode assembly.

Aspect 14) In aspect 12 or 13, further comprising an upper portion sealing operation of sealing the open upper portion of the case with a positive electrode cap.

Aspect 15) In aspect 14, further comprising a terminal connection operation of electrically connecting the positive electrode terminal of the positive electrode cap to the electrode assembly.

## Claims

1. A cylindrical secondary battery comprising:
a cylindrical case with open upper and lower portions;
an electrode assembly including a negative electrode plate, a positive electrode plate, and a separator and accommodated in the case;
a positive electrode cap sealing the open upper portion of the case; and
a negative electrode cap sealing the open lower portion of the case,
wherein the case includes a step portion formed along the perimeter of the open lower portion, the negative electrode cap is mounted on the step portion, and the step portion is configured such that at least a portion thereof protrudes in an inward direction to support a lower portion of the electrode assembly, the inward direction being toward a central axis of a circular cross-section of the case.

2. The cylindrical secondary battery of claim 1, wherein the electrode assembly includes a positive electrode uncoated portion formed as at least a portion of the positive electrode plate protrudes and a negative electrode uncoated portion formed as at least a portion of the negative electrode plate protrudes.

3. The cylindrical secondary battery of claim 2, wherein the negative electrode uncoated portion protrudes downward from a lower portion of the electrode assembly and is located in the inward direction relative to the step portion, the inward direction being toward a central axis of a circular cross-section of the case.

4. The cylindrical secondary battery of claim 2 or 3, further comprising a negative electrode current collector electrically connected to the negative electrode uncoated portion.

5. The cylindrical secondary battery of claim 4, wherein the negative electrode current collector has a shape corresponding to at least a portion of the step portion to be mounted on the step portion.

6. The cylindrical secondary battery of claim 4 or 5, wherein the negative electrode current collector includes a negative electrode plate contacting the negative electrode uncoated portion and a negative electrode flange contacting a lower portion of the step portion.

7. The cylindrical secondary battery of claim 6, wherein the negative electrode current collector includes an electrolyte injection port formed to inject an electrolyte.

8. The cylindrical secondary battery of any one of claims 4 to 7, wherein the negative electrode cap is located below the negative electrode current collector.

9. The cylindrical secondary battery of any one of claims 1 to 8, wherein the step portion is located above a lower end of the case.

10. The cylindrical secondary battery of any one of claims 2 to 8, further comprising a positive electrode current collector electrically connected to the positive electrode uncoated portion, wherein the positive electrode cap includes a positive electrode plate covering the open upper portion of the case and a positive electrode terminal electrically connected to the positive electrode current collector.

11. The cylindrical secondary battery of any one of claims 1 to 10, wherein the step portion includes an elastic member pushing the electrode assembly upward.

12. A method of manufacturing a cylindrical secondary battery, the method comprising:
a preparatory operation of preparing a cylindrical case having open upper and lower portions and including a step portion in the open lower portion;
an insertion operation of inserting an electrode assembly to which a positive electrode current collector is electrically connected to the open upper portion of the case;
a negative electrode connection operation of mounting the negative electrode current collector on the step portion and then electrically connecting the negative electrode current collector to the electrode assembly; and
a lower portion sealing operation of mounting the negative electrode cap on the step portion and then sealing the open lower portion of the case.

13. The method of claim 12, further comprising at least one of:
an injection operation of injecting an electrolyte into an electrolyte injection port formed on the negative electrode current collector; and
a positive electrode connection operation of electrically connecting the positive electrode current collector to the electrode assembly.

14. The method of claim 12 or 13, further comprising an upper portion sealing operation of sealing the open upper portion of the case with a positive electrode cap.

15. The method of claim 14, further comprising a terminal connection operation of electrically connecting the positive electrode terminal of the positive electrode cap to the electrode assembly.
